# EUROPÄISCHE PATENTSCHRIFT

(11) **EP 2 937 183 B1**
(45) Veröffentlichungstag und Bekanntmachung des Hinweises auf die Patenterteilung: **11.05.2016**
(21) Anmeldenummer: 14165551.4
(22) Anmeldetag: 23.04.2014
(51) Int. Cl.: B23P 19/06, B25B 23/14, B25B 23/147

(54) **Verfahren zum Betätigen einer Vorrichtung zum Verschrauben von Bauteilen, sowie Vorrichtung zur Durchführung des Verfahrens**
Method for actuating a device for screwing components, and device for carrying out the method
Procédé d'actionnement d'un dispositif de vissage de composants, et dispositif d'exécution du procédé

(43) Veröffentlichungstag der Anmeldung: 28.10.2015
(73) Patentinhaber: Fehlings, Jürgen, 65396 Walluf (DE); Fehlings, Margot, 65396 Walluf (DE)
(72) Erfinder: Fehlings, Jürgen, 65396 Walluf (DE)
(74) Vertreter: Quermann, Helmut

(56) Entgegenhaltungen:
- EP-A1- 1 623 797
- DE-U1-202008 000 753
- US-A- 5 152 046
- Lange: "Industrielle Linearmotoren Für präzise und dynamische Positionieraufgaben Rein elektrisches Antriebssystem", , 9. Juni 2013 (2013-06-09), XP055146148, Gefunden im Internet: URL:http://www.linmot.com/fileadmin/doc/Ov erviews/Overview_Marketing_d_recent.pdf [gefunden am 2014-10-13]

## Beschreibung

Die Erfindung betrifft ein Verfahren zum Betätigen einer Vorrichtung zum Verschrauben von Bauteilen, wobei die Vorrichtung eine Ausgangswelle, eine Aufnahme für ein Schraubwerkzeug und eine zwischen der Ausgangswelle und der Aufnahme angeordnete Abschaltkupplung aufweist, die bei Erreichen eines bestimmten Drehmomentes auskuppelt.

Die Erfindung betrifft ferner eine Vorrichtung zur Durchführung des Verfahrens.

In der Praxis finden Vorrichtungen zum Verschrauben von Bauteilen Verwendung, die als Druckluft-Abschaltschrauber oder Elektro-Abschaltschrauber ausgebildet sind. Diese besitzen eine einstellbare Abschaltkupplung, die bei Erreichen eines bestimmten Drehmoments, insbesondere bei Erreichen eines voreingestellten Drehmoments auskuppelt. Gleichzeitig wird über einen Ventilstift, der beim Auskuppelvorgang um einige Millimeter in die Abschaltkupplung rutscht, der Antrieb der Vorrichtung gestoppt. Dies erfolgt beim Druckluft-Abschaltschrauber über eine federbelastete Kugel, die einen Drucklufteinlass eines Lamellenmotors verschließt, bzw. beim Elektro-Abschaltschrauber über einen integrierten Sensor, der den Motorstrom abschaltet.

Die bekannten Abschaltschrauber besitzen eine Kupplungshülse, die die Abschaltkupplung an der Antriebseinheit hält und in der sich die Abschaltkupplung selbst, rotierend in der Kupplungshülse bewegt.

Die auf dem Markt befindlichen Abschaltschrauber haben an sich eine hohe Abschaltwiederholgenauigkeit (Standardabweichung vom Mittelwert), welche von den meisten Herstellern mit ±3 % angegeben wird.

Gerade bei sehr kleinen Drehmomenten bis zu 1 Nm gehen aber viele Faktoren in die Abschaltwiederholgenauigkeit der Abschaltkupplung ein. Ein Faktor ist dadurch begründet, dass die Abschaltkupplung in der Kupplungshülse rotiert und durch Verschmutzungen, beispielsweise Späne, Staubablagerungen und dergleichen eine zusätzliche Reibung zwischen Abschaltkupplung und Kupplungshülse erzeugt wird, die die Abschaltwiederholgenauigkeit verfälscht. Es besteht die Gefahr, dass bei zunehmender Verschmutzung die Schraube mit einem zu niedrigen Drehmoment angezogen werden, ohne dass der Anwender dies merkt.

Des Weiteren kann der federbelastete Ventilstift durch Verschmutzung, Federbruch und dergleichen beim Abschaltvorgang nicht in die Abschaltkupplung abtauchen und somit nicht den Antrieb sofort nach dem Auskuppelvorgang stoppen. Ein Doppelschlagen der Abschaltkupplung und eine damit verbundene Drehmomenterhöhung wäre die Folge und würde bei einem automatischen Schraubvorgang nicht erkannt werden.

Um einen Z-Hub (Einschraubhub) zu realisieren, werden Schrauber in den meisten Fällen auf Schlitteneinheiten montiert und pneumatisch oder motorisch gesteuert.

Eine andere Alternative sind Hub-Drehmotoren (z. B. LinMot^{®}). Diese sind kompakte Einheiten, welche den Z-Hub (Schraubervorschub) durch Linearmotortechnik realisieren. Ein am Ende des Linearsystems integrierter Torque-Drehmotor erzeugt die zusätzliche Rotation der Antriebswelle, vorliegend bei einer Vorrichtung zum Verschrauben von Bauteilen deren Ausgangswelle. Diese Hub-Drehmotoren werden bereits zum Verschließen von Kappen und Flaschenverschlüssen verwendet. Allerdings geschieht das Abschalten des Drehmoments über eine gemessene Stromaufnahme im Antriebsregler des Torque-Drehmotors. Dieses Abschaltverhalten reicht aber für das automatische Verschrauben von Klein- und Kleinstschrauben bezüglich der geforderten Abschaltwiederholgenauigkeit nicht aus.

Eine elektrische Vorrichtung zum Verschrauben von Bauteilen, die eine Abschaltkupplung aufweist, ist aus der DE 20 2006 003 677 U1 bekannt.

In der EP 1 579 957 A2 ist eine Druckluft-Schraubervorrichtung beschrieben, die ein Sperrventil für eine Druckluftzuführung aufweist, das extern über eine Steuerleitung ansteuerbar ist.

In der EP 1 623 797 A1 ist ein Schrauber mit einem Antrieb beschrieben, der über eine drehmomentabhängig auslösende Kupplung mit einer Werkzeugantriebswelle zum Antrieb eines Werkzeugs gekoppelt ist. Der Schrauber ist mit einer Steuerelektronik zur Steuerung des Antriebs und mit einem Sensor versehen, wobei der Sensor mit der Steuerelektronik gekoppelt ist, um den Antrieb bei Ansprechen der Kupplung abzuschalten. Die Steuerelektronik ist dazu ausgebildet, den Antrieb nach Abschaltung für eine begrenzte Zeit mit einer erniedrigten Leistung anzusteuern.

Unter der Internetadresse www.linmot.com/fileadmin/doc/Overviews/Overview marketing d recent.pdf" ist eine Broschüre "LinMot Industrielle Linearmotoren - die Linearmotor Technologie für den industriellen Einsatz" beschrieben. Insbesondere auf den Seiten 4 und 5, XP055146148, sind "LinMot Hub-Dreh-Motoren" beschrieben, mit denen beliebig kombinierbare Linear- und Rotationsbewegungen realisiert werden können.

In der DE 20 2008 000 753 U1 ist eine Vorrichtung zum Verschrauben von Bauteilen beschrieben. Diese weist eine Ausgangswelle, eine Aufnahme für ein Schraubwerkzeug und eine zwischen der Ausgangswelle und der Aufnahme angeordnete Abschaltkupplung auf. Die Abschaltkupplung kuppelt bei Erreichen eines bestimmten Drehmoments aus. Ein erstes Kupplungsteil der Abschaltkupplung ist mit der Ausgangswelle drehfest verbunden und ein zweites Kupplungsteil der Abschaltkupplung mit der Aufnahme drehfest verbunden. Die Abschaltkupplung ist innerhalb eines Gehäuses angeordnet. Die Aufnahme durchsetzt eine Öffnung des Gehäuses. Das Gehäuse ist drehfest mit in der Ausgangswelle verbunden.

In der US 5 152 046 A ist ein Verfahren zum konstanthalten der Drehzahl einer Ausgangswelle eines Schraubers beschrieben. Der Schrauber wird hierbei unabhängig von Änderungen im aufzubringenden Schraubmoment mit konstanter Drehzahl angesteuert.
Aufgabe der vorliegenden Erfindung ist es, ein Verfahren der eingangs genannten Art so weiterzubilden, dass dieses eine hohe Abschaltgenauigkeit, insbesondere unter dem Aspekt einer hohen Wiederholgenauigkeit gewährleistet. Diese hohe Abschaltgenauigkeit soll insbesondere bei einem bestimmten Drehmoment, das nicht größer ist als 1 Nm, gewährleistet sein.

Gelöst wird die Aufgabe durch ein Verfahren der eingangs genannten Art, das folgende weitere Merkmale aufweist:
- Ermitteln einer Erhöhung einer für den Schraubvorgang eingestellten konstanten Drehzahl der Ausgangswelle beim Auskuppeln der Abschaltkupplung oder eines Abfalls der Stromaufnahme der Vorrichtung beim Auskuppeln der Abschaltkupplung,
- Stoppen der Drehung der Ausgangswelle nach dem Ermitteln der Änderung.

Aufgrund des erfindungsgemäßen Verfahrens kann bei der Vorrichtung auf einen Ventilstift verzichtet werden, der nach dem Abschalten der Abschaltkupplung die Vorrichtung ausschaltet. Durch den Verzicht auf eine derartige Gestaltung können Fehlabschaltungen vermieden werden. Das Ermitteln der Erhöhung der für den Schraubvorgang eingestellten konstanten Drehzahl der Ausgangswelle beim Auskuppeln der Abschaltkupplung oder des Abfalls der Stromaufnahme der Vorrichtung beim Auskuppeln der Abschaltkupplung ermöglicht das sofortige Stoppen der Ausgangswelle, da unmittelbar mit dem Auskuppeln der Abschaltkupplung einhergehende Kenngrößen als Basis für das Stoppen der Drehung der Ausgangswelle herangezogen werden. Dies ermöglicht ein sofortiges Stoppen der Ausgangswelle.

Vorzugsweise erfolgt das Auskuppeln der Abschaltkupplung bei Erreichen eines voreingestellten Drehmoments. Dieses Drehmoment beträgt insbesondere 1 Nm.

Es ist insbesondere vorgesehen, dass das Stoppen der Drehung der Ausgangswelle umgehend nach dem Ermitteln der Änderung erfolgt.

Von besonderem Vorteil ist es, wenn das Stoppen der Drehung der Ausgangswelle vor Erreichen eines erneuten federkraftbewirkten Einkuppelns der Abschaltkupplung erfolgt.

Aufgabe der vorliegenden Erfindung ist es ferner, eine Vorrichtung zur Durchführung des erfindungsgemäßen Verfahrens anzugeben.

Gelöst wird diese Aufgabe durch eine Vorrichtung, die einen elektrischen Hubdrehmotor, einen elektrischen Drehzahlregler, der eine eingestellte Drehzahl der Ausgangswelle konstant hält und eine elektrische Steuereinrichtung, die beim Auskuppeln der Abschaltkupplung eine Drehzahlerhöhung gegenüber der eingestellten Drehzahl der Ausgangswelle ermittelt und die Ausgangswelle stoppt, oder die beim Auskuppeln der Abschaltkupplung ein abfallen der Stromaufnahme ermittelt und die Ausgangswelle stoppt, aufweist.

Mittels dieser Vorrichtung kann auf baulich einfache Art und Weise der Vorschub und die Drehung der jeweils einzuschraubenden Schraube bewerkstelligt werden.

Insbesondere weist der Hubdrehmotor einen Linearmotor für das Verfahren der Ausgangswelle in deren Längsachse und einen an den Linearmotor angebauten Torque-Drehmotor zum Drehen der Ausgangswelle um deren Längsachse auf. Die Vorrichtung weist hierbei insbesondere eine elektrische Steuereinrichtung zum unabhängigen Ansteuern von Linearmotor und Drehmotor auf.

Bezüglich der Gestaltung der Abschaltkupplung wird es als besonders vorteilhaft angesehen, wenn diese eine Formschlusskupplung aufweist, wobei ein Kupplungsteil der Abschaltkupplung unter der Kraft einer Feder gegen ein anderes Kupplungsteil der Abschaltkupplung vorgespannt ist. Wird das bestimmte Drehmoment, insbesondere ein voreingestelltes Drehmoment beim Verschrauben von Bauteilen mittels der Vorrichtung überschritten, gelangt das eine Kupplungsteil außer Eingriff mit dem anderen Kupplungsteil.

Es wird als baulich besonders vorteilhaft angesehen, wenn eines der Kupplungsteile mindestens einen Vorsprung aufweist, der einen Vorsprung des anderen Kupplungsteils kontaktiert, wobei zwischen den Vorsprüngen wirksame Kontaktflächen bei Überschreiten des bestimmten, insbesondere voreingestellten Drehmoments ein Auseinanderbewegen der Kupplungsteile entgegen der Kraft einer Feder bewirken. Weist jedes Kupplungsteil nur einen Vorsprung auf, wird das Drehmoment bei rotatorischer Anlage der beiden Vorsprünge übertragen. Erfolgt eine Überschreitung des bestimmten Drehmoments, werden die Vorsprünge aneinander vorbeibewegt, indem ein axial verschiebliches Kupplungsteil axial zum anderen, nicht axial verschieblichen Kupplungsteil verschoben wird. Die beiden Kupplungsteile drehen dann in einem definierten Freilauf, bis nach aufeinander zu bewegen der beiden Kupplungsteile die beiden Vorsprünge der Kupplungsteile wieder in Kontakt gelangen. Weist jedes Kupplungsteil nur einen Vorsprung auf, ergibt sich somit ein Freilauf von ungefähr 360°. Weist jedes Kupplungsteil mehrere Vorsprünge auf, ergibt sich ein bezüglich eines Kreisbogens geringerer Freilauf.

Vorzugsweise weist jedes Kupplungsteil mehrere Vorsprünge auf, die bezogen auf deren Rotationskreis über diesen gleichmäßig verteilt angeordnet sind. Weist jedes Kupplungsteil beispielsweise zwei Vorsprünge auf, die um 180° zueinander verdreht angeordnet sind, ergibt sich ein Freilauf von ungefähr 180°. Weist jedes Kupplungsteil vier Vorsprünge auf, die über den Rotationskreis gleichmäßig verteilt sind, ergibt sich ein Freilauf von ungefähr 90°.

Gemäß der Erfindung ist vorgesehen, dass die den elektrischen Hubdrehmotor aufweisende Vorrichtung den elektrischen Drehzahlregler aufweist, der eine eingestellte Drehzahl der Ausgangswelle konstant hält. Bei Erreichen des bestimmten Drehmoments, beispielsweise des Drehmoments von 1 Nm kuppelt die Abschaltkupplung durch den Kraftanstieg aus. Aufgrund des Freilaufs der Abschaltkupplung steigt die Drehzahl der Ausgangswelle, insbesondere die Drehzahl der Ausgangswelle des elektrischen Hubdrehmotors ruckartig an, da die Vorrichtung bzw. der Motor durch das Auskoppeln vom Zustand der Last in den Zustand des Freilaufs wechselt. Vor diesem Hintergrund ist vorgesehen, dass die elektrische Steuereinrichtung der Vorrichtung beim Auskuppeln der Abschaltkupplung eine Drehzahlerhöhung gegenüber der eingestellten Drehzahl der Ausgangswelle ermittelt und die Ausgangswelle stoppt. Dieses Stoppen der Ausgangswelle erfolgt insbesondere derart, dass die elektrische Steuereinrichtung die Abschaltkupplung innerhalb des Freilaufs der Abschaltkupplung stoppt. Das Stoppen erfolgt somit bevor die sich an den Freilauf anschließenden Vorsprünge der Kupplungsteile kontaktieren.

Entsprechendes gilt auch für den Strom der Vorrichtung bzw. des elektrischen Hubdrehmotors, der kurzzeitig nach dem Kuppelvorgang, somit dem Trennen der Kupplungsteile der Abschaltkupplung abfällt. Unter diesem Aspekt ist vorgesehen, dass die elektrische Steuereinrichtung der Vorrichtung beim Auskuppeln der Abschaltkupplung ein Abfallen der Stromaufnahme ermittelt und die Ausgangswelle stoppt. Auch dieses Stoppen erfolgt sofort, insbesondere erfolgt das Stoppen innerhalb des Freilaufs der Abschaltkupplung.

Gemäß einer bevorzugten Weiterbildung der Vorrichtung ist vorgesehen, dass das eine Kupplungsteil mit der Ausgangswelle drehfest verbunden ist und das andere Kupplungsteil mit der Aufnahme drehfest verbunden ist, wobei die Abschaltkupplung innerhalb eines Gehäuses angeordnet ist und die Aufnahme eine Öffnung des Gehäuses durchsetzt, wobei das Gehäuse drehfest mit der Ausgangswelle verbunden ist. Demzufolge dreht im Betrieb der Vorrichtung das Gehäuse gemeinsam mit der Kupplung. Verschmutzungen zwischen der Abschaltkupplung und dem Gehäuse haben deshalb keinerlei Auswirkungen auf das Drehmoment.

Vorzugsweise kommt dem Gehäuse die Funktion einer Führung der Abschaltkupplung zu. Beim Abschalten der Kupplung verbleibt ein Kupplungsteil der Abschaltkupplung in dessen Position zum Gehäuse, während das andere Kupplungsteil der Abschaltkupplung axial zum Gehäuse verschoben wird.

Da das Gehäuse und die Abschaltkupplung sich zusammen drehen, mit derselben Drehzahl vor dem Abschalten der Abschaltkupplung, kann die Öffnung des Gehäuses, den die Aufnahme für das Schraubwerkzeug durchsetzt, mit geringem Spiel bezüglich der Aufnahme ausgebildet sein. Insbesondere kann vorgesehen sein, dass die Aufnahme die Öffnung des Gehäuses abgedichtet durchsetzt. Hierdurch wird weitestgehend vermieden, dass Verschmutzungen in den Innenraum zwischen Gehäuse und Abschaltkupplung gelangen können.

Vorzugsweise ist das Gehäuse nicht nur drehfest mit der Ausgangswelle der Vorrichtung verbunden, sondern insgesamt fest, somit auch axial fest mit der Ausgangswelle verbunden. Diese Verbindung erfolgt beispielsweise über eine Passfeder und ein zusätzliches Element zum axialen Fixieren von Gehäuse und Aufnahme.

Das erfindungsgemäße Verfahren und die Vorrichtung zur Durchführung des Verfahrens nebst der Weiterbildungen ermöglicht es, auf einen Ventilstift zu verzichten, der nach dem Abschalten der Abschaltkupplung die Vorrichtung bzw. den Motor ausschaltet. Durch den Verzicht auf eine derartige Gestaltung können Fehlabschaltungen vermieden werden. Das sofortige Stoppen der Ausgangswelle erfolgt stattdessen mittels der elektrischen Steuereinrichtung der Vorrichtung.

Das erfindungsgemäße Verfahren und die Vorrichtung, einschließlich deren Weiterbildungen ist Basis für eine extrem hohe Abschaltwiederholgenauigkeit von kleiner ±1 % Standardabweichung vom Mittelwert, und dies bei einem bestimmten bzw. voreingestellten Drehmoment, das maximal 1 Nm beträgt.

Weitere Merkmale der Erfindung sind in den Unteransprüchen, der Beschreibung der Zeichnung der Figuren und den Figuren selbst dargestellt, wobei bemerkt wird, dass alle Einzelmerkmale und alle Kombinationen von Einzelmerkmalen erfindungswesentlich sind.

In den Figuren ist das erfindungsgemäße Verfahren sowie die Vorrichtung zu dessen Durchführung anhand eines bevorzugten Ausführungsbeispiels dargestellt, ohne hierauf beschränkt zu sein. Es zeigt:

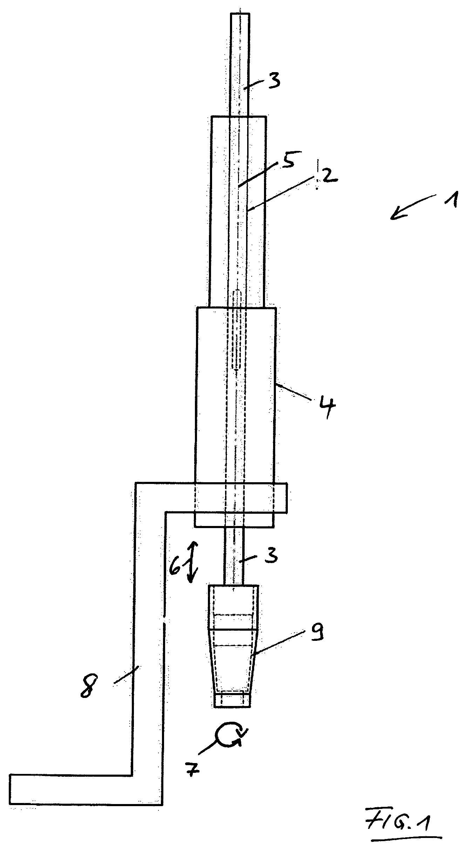

- Fig. 1: in schematischer Darstellung in einer Seitenansicht eine Vorrichtung zum Verschrauben von Bauteilen,
- Fig. 2: betreffend einen Teilbereich der in Fig. 1 veranschaulichten Vorrichtung, ein unteres Ende einer Ausgangswelle und ein mit der Ausgangswelle fest verbundenes Gehäuse, mit nicht dargestellter vorderer Wandung zwecks Verdeutlichung der innerhalb des Gehäuses angeordneten Funktionsteile der Vorrichtung, insbesondere einer Abschaltkupplung,
- Fig. 3: die Vorrichtung im Bereich der Abschaltkupplung, veranschaulicht in einer Explosionsdarstellung bezüglich der Kupplungsteile der Abschaltkupplung,
- Fig. 4: ein Drehzahl-Zeit-Diagramm,
- Fig. 5: ein Strom-Zeit-Diagramm.

Die Vorrichtung 1 zum Verschrauben von Bauteilen ist als elektrischer Hubdrehmotor ausgebildet, der einen Linearmotor 2 für das Verfahren einer Welle, die gleichzeitig die Ausgangswelle 3 der Vorrichtung 1 bildet, in deren Längsachse und einen an den Linearmotor 2 angebauten Torque-Drehmotor 4 zum Drehen der Welle bzw. Ausgangswelle 3 um deren Längsachse 5 aufweist. Ein derartiger elektrischer Hubmotor ist aus dem Stand der Technik bekannt und wird durch die Firma NTE AG/LinMot (www.LinMot.com) vertrieben.

Bei Betätigung des elektrischen Hubmotors lässt sich somit die Ausgangswelle 3 gemäß Doppelpfeil 6 in Richtung der Längsachse 5 hin und her bewegen und gemäß Doppelpfeil 7 um die Längsachse 5 in entgegengesetzten Richtungen antreiben.

Die Vorrichtung 1 weist ferner eine nicht veranschaulichte Steuereinrichtung zum unabhängigen Ansteuern von Linearmotor 2 und Drehmotor 4 auf.

Ein Gehäuse 9 des Drehmotors 4 ist in einem Ständer 8 gelagert, womit die Vorrichtung 1 stationär im Ständer 8 gelagert ist, der ortsfest ist.

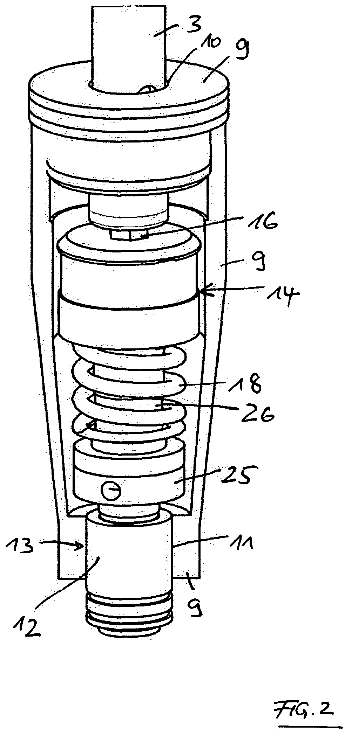

Der sich an den unteren Endbereich der Ausgangswelle 3 anschließende Abschnitt der Vorrichtung 1 ist in Fig. 2 vergrößert dargestellt:

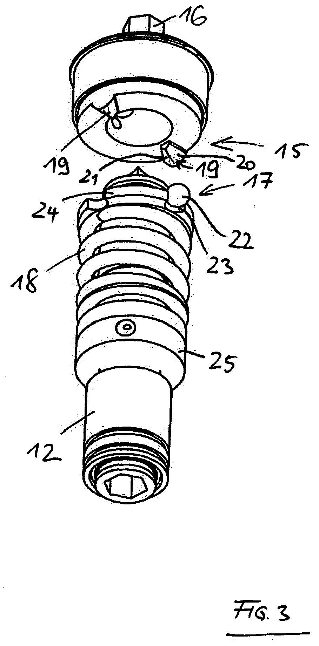

In geringfügigem Abstand zum unteren Ende der Ausgangswelle 3 ist mit dieser das Gehäuse 9 fest verbunden. Dieses ist bezüglich der Längsachse 5 rotationssymmetrisch ausgebildet und mit der Ausgangswelle 3 somit sowohl in Achsrichtung als auch in Drehrichtung fest verbunden. Beim Drehen der Ausgangswelle 3 dreht sich das Gehäuse 9 somit mit derselben Drehgeschwindigkeit wie die Ausgangswelle 3. Im Bereich einer oberen Bohrung 10 des Gehäuses 9 durchsetzt die Ausgangswelle 3 das Gehäuse 9 und es ist das Gehäuse 9 im Bereich des der Ausgangswelle 3 abgewandten Endes mit einer weiteren Bohrung 11 versehen, in deren Bereich eine Aufnahme 12 für ein Schraubwerkzeug angeordnet ist. Diese Aufnahme 12 ist als Schnellwechselfutter für eine Schrauberklinge ausgebildet (wie es insbesondere der Darstellung der Fig. 3 zu entnehmen ist).

Der Außendurchmesser eines zylindrischen Abschnitts 13 der Aufnahme 12, wobei der Abschnitt 13 die Bohrung 11 durchsetzt, ist geringfügig geringer als der Innendurchmesser des Gehäuses 9 in dem Endbereich, der die Aufnahme 12 aufnimmt, sodass die Aufnahme 12 weitgehend abgedichtet diesen Bereich des Gehäuses 9 durchsetzt.

Im Drehmomentenfluss zwischen dem unteren Ende der Ausgangswelle 3 und der Aufnahme 12 ist eine Abschaltkupplung 14 angeordnet, die bei Erreichen eines bestimmten Drehmoments, insbesondere eines voreingestellten Drehmoments, auskuppelt. Dieses Drehmoment beträgt beispielsweise 1 Nm. Ein erstes Kupplungsteil 15 der Abschaltkupplung 14 ist über ein Formschlusselement 16 mit der Ausgangswelle 3 im Bereich dessen unteren, stirnseitigen Endes drehfest verbunden und es ist ein zweites Kupplungsteil 17 der Abschaltkupplung 14 drehfest mit der Aufnahme 12 verbunden. Diese Details sind besonders anschaulich der Darstellung der Fig. 3 zu entnehmen, die die Abschaltkupplung 14 in einer Explosionsdarstellung veranschaulicht.

Die Abschaltkupplung 14 und alle mit dieser zusammenwirkenden Funktionsteile zwischen der Ausgangswelle 3 und der Aufnahme 12 sind innerhalb des Gehäuses 9 angeordnet, die diese im Übrigen vollständig umgibt.

Die Abschaltkupplung 14 weist eine Formschlusskupplung auf, wobei das Kupplungsteil 17 unter einer Einwirkung einer Feder 18, die als Schraubendruckfeder ausgebildet ist, gegen das Kupplungsteil 15 vorgespannt ist. Im Detail weist das Kupplungsteil 15 zwei auf das Kupplungsteil 17 gerichtete Vorsprünge 19 auf, wobei der jeweilige Vorsprung 19 eine Auflaufschräge 20 und eine weitere Schräge 21 aufweist. Bezogen auf die Längsachse 5 sind die beiden Vorsprünge 19 diametral angeordnet, schließen somit einen Freilaufwinkel von 180° ein. Entsprechend weist das Kupplungsteil 17 zwei Vorsprünge 22 auf. Diese sind als Kugeln ausgebildet sind. Die beiden Vorsprünge 22 bzw. Kugeln sind gleichfalls, bezogen auf die Längsachse 5, diametral angeordnet, schließen somit gleichfalls einen Freilaufwinkel von 180°ein. In der Fig. 3 ist nur die eine Kugel sichtbar. Die jeweilige Kugel 22 ist in einer Aufnahme 23 eines Halterings 24 gehalten, indem die Kugel 22 in die zugeordnete Aufnahme 23 hineinragt. Hierdurch ist eine Drehmomentübertragung zwischen jeweiliger Kugel 22 und Haltering 24 möglich. Die Feder 18 ist zwischen dem Haltering 24 und einem im Bereich der Aufnahme 12 angeordneten Stellring 25 für die Drehmomenteinstellung wirksam. Dieser Stellring ist in veränderlichen axialen Positionen bezüglich der Aufnahme 12 anordbar und in einer zentralen teleskopierbaren Welle 26, die drehfest mit dem Kupplungsteil 17 verbunden ist, gelagert.

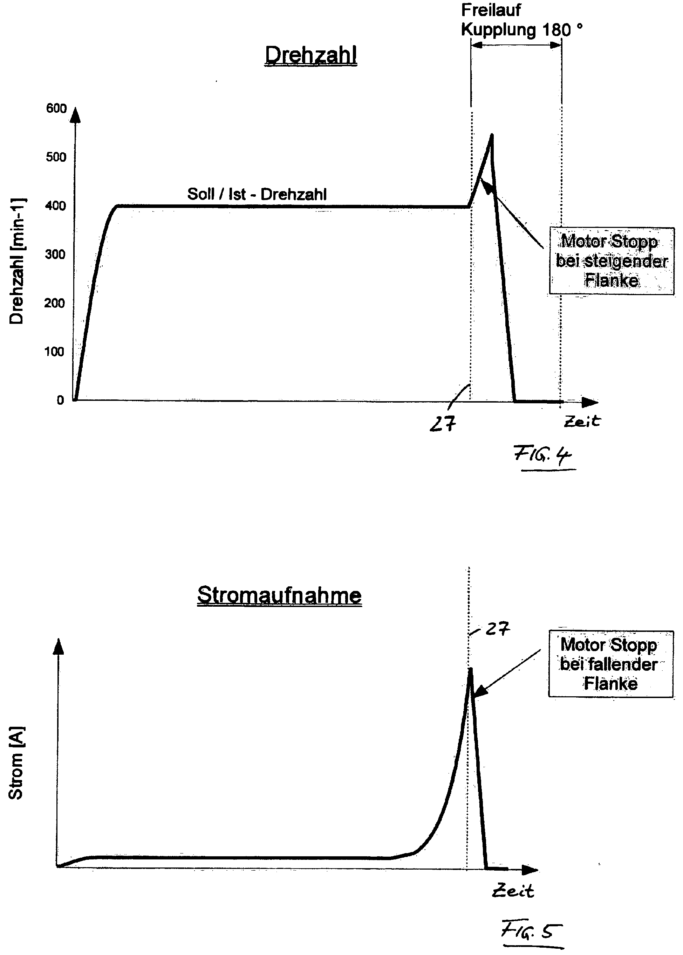

Bei Überschreiten des voreingestellten Drehmoments werden die beiden Kupplungsteile 15 und 17 somit voneinander weg bewegt. Konkret liegt beim Einschraubvorgang zunächst das erste Kupplungsteil 15 im Bereich des jeweiligen Vorsprungs, konkret der Auflaufschräge 20 an dem zugeordneten Vorsprung 22 bzw. der zugeordneten Kugel des Kupplungsteils 17 an. Wird ein höheres Drehmoment in der Ausgangswelle 3 eingeleitet, läuft die Kugel 22 entlang der Auflaufschräge 20 auf, womit das Kupplungsteil 17 entsprechend vom Kupplungsteil 15 weg bewegt wird, bis zum Erreichen des Scheitelpunktes zwischen der Auflaufschräge 20 und der Schräge 21. Dieser Scheitel stellt den Abschaltpunkt 27 der Vorrichtung dar (siehe Fig. 4 und 5), mit dem Ziel, die Drehung der Ausgangswelle 3 sofort zu stoppen. Nach dem Überschreiten dieses Scheitelpunktes wird die Kugel 22 an der Schräge 21 des Vorsprungs 19 vorbei bewegt und die Ausgangswelle 3 abgeschaltet, bevor die Kugel 22 in den Bereich des nächsten Vorsprungs 19 gelangt. Ferner werden nach dem Überschreiten des Scheitelpunktes die beiden Kupplungsteile 15, 17 wieder aufeinander zu bewegt.

Die Vorrichtung 1 weist einen nicht veranschaulichten elektrischen Drehzahlregler auf, der eine eingestellte Drehzahl der Ausgangswelle 3 konstant hält. Diese eingestellte Drehzahl, Soll/Ist-Drehzahl, beträgt beispielsweise 400/min.

Wie der Darstellung der Fig. 4 zu entnehmen ist, erfolgt das Abstoppen der Vorrichtung 1, demnach das Abstoppen der Ausgangswelle 3 und damit das Beenden des Schraubvorgangs dann, wenn die elektrische Steuereinrichtung beim Auskoppeln der Abschaltkupplung 14, somit dann, wenn sich das Kupplungsteil 17 vom Kupplungsteil 15 weg bewegt, eine Drehzahlerhöhung gegenüber der eingestellten Drehzahl (400/min) der Ausgangswelle 3 ermittelt. Bei Ermittlung dieser Drehzahlerhöhung stoppt die elektrische Steuereinrichtung die Ausgangswelle 3 unmittelbar, somit bevor die Ausgangswelle 3 um den Freilaufwinkel von 180° gedreht ist und damit die Kontaktierung des Vorsprungs 19 mit dem nächsten Vorsprung 22 erfolgt.

Alternativ kann, wie zur Fig. 5 dargestellt, das Stoppen der Ausgangswelle 3 dann erfolgen, wenn die elektrische Steuereinrichtung beim Auskuppeln der Abschaltkupplung 14 ein Abfallen der Stromaufnahme ermittelt.

Der elektrische rotative Torque-Drehmotor 4, der mit einem Drehzahlregler gekoppelt ist, hält somit die eingestellte Schrauberdrehzahl (400/min) konstant. Bei Erreichen des bestimmten, insbesondere voreingestellten Drehmoments kuppelt die Abschaltkupplung 14 durch den Kraftanstieg aus. Da die Kupplung den Freilauf von ca. 180° besitzt (das heißt nach dem Kuppelvorgang kann erst nach ca. 180° der zweite Kuppelvorgang erfolgen), steigt die Motorgeschwindigkeit ruckartig, da der Motor durch das Auskuppeln von Last auf Leerlauf wechselt. Diese kurzfristige Drehzahlerhöhung wird im Regler genutzt, um den Motor sofort zu stoppen.

Das Gleiche gilt auch für den Strom des Motors, welcher kurzzeitig nach dem Kuppelvorgang abfällt. Auch hiermit kann ein sofortiger Stopp des Motors bewirkt werden.

Bei dem Verfahren zum Betreiben der Vorrichtung 1 wird somit eine Erhöhung einer für den Schraubvorgang eingestellten konstanten Drehzahl der Ausgangswelle beim Auskuppeln der Abschaltkupplung ermittelt oder ein Abfall der Stromaufnahme der Vorrichtung beim Auskuppeln der Abschaltkupplung ermittelt. Nach diesem Ermitteln erfolgt das Stoppen der Ausgangswelle. Dieses Stoppen erfolgt umgehend, insbesondere vor einer Drehstellung der Ausgangswelle 3 in der ein erneutes automatisches Einkuppeln der Abschaltkupplung erfolgt, demnach vor Erreichen des Endes des Freilaufs.

### Bezugszeichenliste

- 1: Vorrichtung
- 2: Linearmotor
- 3: Welle/Ausgangswelle
- 4: Torque-Drehmotor
- 5: Längsachse
- 6: Doppelpfeil
- 7: Doppelpfeil
- 8: Ständer
- 9: Gehäuse
- 10: Bohrung
- 11: Bohrung
- 12: Aufnahme
- 13: Abschnitt
- 14: Abschaltkupplung
- 15: Erstes Kupplungsteil
- 16: Formschlusselement
- 17: Zweites Kupplungsteil
- 18: Feder
- 19: Vorsprung
- 20: Auflaufschräge
- 21: Schräge
- 22: Vorsprung/Kugel
- 23: Aufnahme
- 24: Haltering
- 25: Stellring
- 26: Welle
- 27: Bezugslinie

## Patentansprüche

1. Verfahren zum Betätigen einer Vorrichtung (1) zum Verschrauben von Bauteilen, wobei die Vorrichtung (1) eine Ausgangswelle (3), eine Aufnahme (12) für ein Schraubwerkzeug und eine zwischen der Ausgangswelle (3) und der Aufnahme (12) angeordnete Abschaltkupplung (14) aufweist, die bei Erreichen eines bestimmten Drehmoments auskuppelt, **gekennzeichnet durch** folgende Merkmale:
- Ermitteln einer Erhöhung einer für den Schraubvorgang eingestellten konstanten Drehzahl der Ausgangswelle (3) beim Auskuppeln der Abschaltkupplung (14) oder eines Abfalls der Stromaufnahme der Vorrichtung (1) beim Auskuppeln der Abschaltkupplung (14),
- Stoppen der Drehung der Ausgangswelle (3) nach dem Ermitteln der Änderung.

2. Verfahren nach Anspruch 1, **dadurch gekennzeichnet, dass** das Stoppen der Drehung der Ausgangswelle (3) umgehend nach dem Ermitteln der Änderung erfolgt.

3. Verfahren nach Anspruch 1 oder 2, **dadurch gekennzeichnet, dass** das Stoppen der Drehung der Ausgangswelle (3) vor Erreichen eines erneuten federkraftbewirkten Einkuppelns der Abschaltkupplung (14) erfolgt.

4. Verfahren nach einem der Ansprüche 1 bis3, **dadurch gekennzeichnet, dass** die Abschaltkupplung (14) bei Erreichen eines bestimmten Drehmoments, das ≤ 1 Nm ist, auskuppelt.

5. Vorrichtung zur Durchführung des Verfahrens nach einem der Ansprüche 1 bis4, **dadurch gekennzeichnet, dass** die Vorrichtung (1) einen elektrischen Hubdrehmotor (4), einen elektrischen Drehzahlregler aufweist, der eine eingestellte Drehzahl der Ausgangswelle (3) konstant hält und eine elektrische Steuereinrichtung, die beim Auskuppeln der Abschaltkupplung (14) eine Drehzahlerhöhung gegenüber der eingestellten Drehzahl der Ausgangswelle (3) ermittelt und die Ausgangswelle (3) stoppt, oder die beim Auskuppeln der Abschaltkupplung (14) ein Abfallen der Stromaufnahme ermittelt und die Ausgangswelle (3) stoppt, aufweist.

6. Vorrichtung nach Anspruch 5, **dadurch gekennzeichnet, dass** der elektrische Hubdrehmotor einen Linearmotor (2) für das Verfahren der Ausgangswelle (3) in deren Längsachse (5) und einen an den Linearmotor (2) angebauten Torque-Drehmotor (4) zum Drehen der Ausgangswelle (3) um deren Längsachse (5) aufweist.

7. Vorrichtung nach Anspruch 6, **dadurch gekennzeichnet, dass** die Vorrichtung (1) eine elektrische Steuereinrichtung zum unabhängigen Ansteuern von Linearmotor (2) und Drehmotor (4) aufweist.

8. Vorrichtung nach einem der Ansprüche 5 bis 7, **dadurch gekennzeichnet, dass** die Abschaltkupplung (14) eine Formschlusskupplung aufweist, wobei ein Kupplungsteil (17) der Abschaltkupplung (14) unter Federkraft gegen ein anderes Kupplungsteil (15) der Abschaltkupplung (14) vorgespannt ist.

9. Vorrichtung nach Anspruch 8, **dadurch gekennzeichnet, dass** eines der Kupplungsteile (15) mindestens einen Vorsprung (19) aufweist, der einen Vorsprung (22) des anderen Kupplungsteils (17) kontaktiert, wobei zwischen den Vorsprüngen (19, 22) wirksame Kontaktflächen bei Überschreiten des bestimmten Drehmoments ein Auseinanderbewegen der Kupplungsteile (15, 17) entgegen der Kraft einer Feder (18) bewirken.

10. Vorrichtung nach Anspruch 8 oder9, **dadurch gekennzeichnet, dass** jedes Kupplungsteil (15 bzw. 17) zwei Vorsprünge (19 bzw. 22) aufweist, die bezogen auf deren Rotationskreis diametral angeordnet sind.

11. Vorrichtung nach einem der Ansprüche 5 bis 10, **dadurch gekennzeichnet, dass** die elektrische Steuereinrichtung die Abschaltkupplung (14) innerhalb eines Freilaufs der Abschaltkupplung (14) zwischen den zugeordneten Vorsprüngen (19, 22) der Kupplungsteile (15, 17) stoppt.

12. Vorrichtung nach einem der Ansprüche 8 bis11, **dadurch gekennzeichnet, dass** das eine Kupplungsteil (15) mit der Ausgangswelle (3) drehfest verbunden ist und das andere Kupplungsteil (17) mit der Aufnahme (12) drehfest verbunden ist, wobei die Abschaltkupplung (14) innerhalb eines Gehäuses (9) angeordnet ist und die Aufnahme (12) eine Öffnung (11) des Gehäuses (9) durchsetzt, wobei das Gehäuse (9) drehfest mit der Ausgangswelle (3) verbunden ist.

## Claims

1. Method for operating an apparatus (1) for screwing components, wherein the apparatus (1) has an output shaft (3), a holder (12) for a screwdriver, and a shut-off clutch (14) which is arranged between the output shaft (3) and the holder (12) and disengages when a specific torque is reached, **characterized by** the following features:
- determining an increase in a constant rotation speed, which is set for the screwing process, of the output shaft (3) when the shut-off clutch (14) is disengaged, or a drop in the power consumption by the apparatus (1) when the shut-off clutch (14) is disengaged,
- stopping rotation of the output shaft (3) after the change is ascertained.

2. Method according to Claim 1, **characterized in that** rotation of the output shaft (3) is stopped immediately after the change is ascertained.

3. Method according to Claim 1 or 2, **characterized in that** rotation of the output shaft (3) is stopped before renewed spring-force-operated engagement of the shut-off clutch (14) is achieved.

4. Method according to one of Claims 1 to 3, **characterized in that** the shut-off clutch (14) disengages when a specific torque, which is ≤ 1 Nm, is reached.

5. Apparatus for carrying out the method according to one of Claims 1 to 4, **characterized in that** the apparatus (1) has an electrical linear-rotary motor (4), an electrical rotation speed regulator which keeps a set rotation speed of the output shaft (3) constant, and an electrical control device which ascertains an increase in rotation speed compared to the set rotation speed of the output shaft (3) and stops the output shaft (3), or ascertains a drop in the power consumption and stops the output shaft (3) when the shut-off clutch (14) is disengaged.

6. Apparatus according to Claim 5, **characterized in that** the electrical linear-rotary motor has a linear motor (2) for moving the output shaft (3) in its longitudinal axis (5) and a torque rotary motor (4), which is attached to the linear motor (2), for rotating the output shaft (3) about its longitudinal axis (5).

7. Apparatus according to Claim 6, **characterized in that** the apparatus (1) has an electrical control device for independently actuating the linear motor (2) and the rotary motor (4).

8. Apparatus according to one of Claims 5 to 7, **characterized in that** the shut-off clutch (14) has a positive clutch, wherein a clutch part (17) of the shut-off clutch (14) is prestressed against another clutch part (15) of the shut-off clutch (14) under spring force.

9. Apparatus according to Claim 8, **characterized in that** one of the coupling parts (15) has at least one projection (19) which makes contact with a projection (22) of the other clutch part (17), wherein contact areas which are active between the projections (19, 22) cause the clutch parts (15, 17) to move away from one another against the force of a spring (18) when the specific torque is exceeded.

10. Apparatus according to Claim 8 or 9, **characterized in that** each clutch part (15 and, respectively, 17) has two projections (19 and, respectively, 22) which are arranged diametrically with respect to the circle of rotation thereof.

11. Apparatus according to one of Claims 5 to 10, **characterized in that** the electrical control device stops the shut-off clutch (14) within a freewheel of the shut-off clutch (14) between the associated projections (19, 22) of the clutch parts (15, 17).

12. Apparatus according to one of Claims 8 to 11, **characterized in that** one clutch part (15) is connected in a rotationally fixed manner to the output shaft (3), and the other clutch part (17) is connected in a rotationally fixed manner to the holder (12), wherein the shut-off clutch (14) is arranged within a housing (9), and the holder (12) passes through an opening (11) in the housing (9), wherein the housing (9) is connected in a rotationally fixed manner to the output shaft (3).

## Revendications

1. Procédé d'actionnement d'un dispositif (1) de vissage de composants, dans lequel le dispositif (1) comprend un arbre de sortie (3), un réceptacle (12) destiné à un outil de vissage et un accouplement de débrayage (14) disposé entre l'arbre de sortie (3) et le réceptacle (12), qui se désaccouple lorsqu'un couple de rotation déterminé est atteint, **caractérisé par** les étapes consistant à :
- déterminer une augmentation d'une vitesse de rotation constante de l'arbre de sortie (3) réglée pour le processus de vissage lors du désaccouplement de l'accouplement de débrayage (14) ou une diminution de la consommation de courant du dispositif (1) lors du désaccouplement de l'accouplement de débrayage (14),
- arrêter la rotation de l'arbre de sortie (3) après que la modification a été déterminée.

2. Procédé selon la revendication 1, **caractérisé en ce que** l'arrêt de la rotation de l'arbre de sortie (3) est effectué immédiatement après que la modification a été déterminée.

3. Procédé selon la revendication 1 ou 2, **caractérisé en ce que** l'arrêt de la rotation de l'arbre de sortie (3) est effectué avant que l'engagement par une force de ressort de l'accouplement de débrayage (14) soit de nouveau effectué.

4. Procédé selon l'une quelconque des revendications 1 à 3, **caractérisé en ce que** l'accouplement de débrayage (14) est désaccouplé lorsqu'un couple de rotation déterminé ≤ 1 Nm a été atteint.

5. Dispositif destiné à mettre en oeuvre le procédé selon l'une quelconque des revendications 1 à 4, **caractérisé en ce que** le dispositif (1) comprend un moteur de treuil électrique (4), un régulateur de vitesse de rotation électrique qui maintient constante une vitesse de rotation réglée de l'arbre de sortie (3) et un dispositif de commande électrique qui détermine une augmentation de la vitesse de rotation par rapport à la vitesse de rotation réglée de l'arbre de sortie (3) lors du désaccouplement de l'accouplement de débrayage (14) et qui arrête l'arbre de sortie (3), ou qui détermine une diminution de la consommation de courant et arrête l'arbre de sortie (3) lors du désaccouplement de l'accouplement de débrayage (14).

6. Dispositif selon la revendication 5, **caractérisé en ce que** le moteur de treuil électrique comporte un moteur linéaire (2) destiné au procédé concernant l'arbre de sortie (3) sur son axe longitudinal (5) et un moteur rotatif à couple (4) monté sur le moteur linéaire (2), destiné à mettre en rotation l'arbre de sortie (3) autour de son axe longitudinal (5).

7. Dispositif selon la revendication 6, **caractérisé en ce que** le dispositif (1) comporte un dispositif de commande électrique destiné à commander indépendamment l'un de l'autre le moteur linéaire (2) et le moteur rotatif (4).

8. Dispositif selon l'une quelconque des revendications 5 à 7, **caractérisé en ce que** l'accouplement de débrayage (14) comprend un accouplement à complémentarité de forme, dans lequel une partie d'accouplement (17) de l'accouplement de débrayage (14) est précontrainte par une force de rappel agissant contre une autre partie d'accouplement (15) de l'accouplement de débrayage (14).

9. Dispositif selon la revendication 8, **caractérisé en ce que** l'une des parties d'accouplement (15) comporte au moins une protubérance (19) qui vient au contact d'une protubérance (22) de l'autre partie d'accouplement (17), dans lequel des surfaces de contact actives entre les protubérances (19, 22) produisent un mouvement d'écartement des parties d'accouplement (15, 17) s'opposant à la force d'un ressort (18) lorsque le couple de rotation déterminé est dépassé.

10. Dispositif selon la revendication 8 ou 9, **caractérisé en ce que** chaque partie d'accouplement (15 ou 17) comporte deux protubérances (19 ou 22) qui sont disposées diamétralement par rapport à leur cercle de rotation.

11. Dispositif selon l'une quelconque des revendications 5 à 10, **caractérisé en ce que** le dispositif de commande électrique arrête l'accouplement de débrayage (14) au cours d'un fonctionnement en roue libre de l'accouplement de débrayage (14) entre les protubérances associées (19, 22) des parties d'accouplement (15, 17).

12. Dispositif selon l'une quelconque des revendications 8 à 11, **caractérisé en ce qu'**une partie d'accouplement (15) est reliée de manière solidaire en rotation à l'arbre de sortie (3) et **en ce que** l'autre partie d'accouplement (17) est reliée de manière solidaire en rotation au réceptacle (12), dans lequel l'accouplement de débrayage (14) est disposé à l'intérieur d'un boîtier (9) et le réceptacle (12) passe à travers une ouverture (11) ménagée dans le boîtier (9), dans lequel le boîtier (9) est relié de manière solidaire en rotation à l'arbre de sortie (3).
